# EUROPEAN PATENT SPECIFICATION

(11) **EP 3 689 573 B1**
(45) Date of publication and mention of the grant of the patent: **10.08.2022**
(21) Application number: 20154754.4
(22) Date of filing: 31.01.2020
(51) Int. Cl.: B29C 45/00, B29C 45/16, B29C 45/26, B29C 45/33, B29C 45/44, B60H 1/00

(54) **A SET OF HINGED COMPONENTS PRODUCED BY MULTI-MATERIAL INJECTION MOLDING**
GRUPPE MIT ANGELENKTEN KOMPONENTEN HERGESTELLT DURCH MEHRKOMPONENTEN-SPRITZGIESSEN
ENSEMBLE DE CHARNIÈRE MOULÉE PAR INJECTION À PLUSIEURS COMPOSANTS

(30) Priority: 01.02.2019 IT 201900001489
(43) Date of publication of application: 05.08.2020
(73) Proprietor: DENSO THERMAL SYSTEMS S.p.A., 10046 Poirino (Torino) (IT)
(72) Inventor: BOUSNINA, Imed, I-10046 POIRINO (Torino) (IT); BASEGGIO, Daniele, I-10046 POIRINO (Torino) (IT); BERGAMO, Luca, I-10046 POIRINO (Torino) (IT); PANIZZA, Manuela, I-10046 POIRINO (Torino) (IT); LERIN, Eros, I-10046 POIRINO (Torino) (IT)
(74) Representative: Vanzini, Christian

(56) References cited:
- EP-A1- 2 492 127
- WO-A1-2015/086601
- DE-A1- 19 808 223
- GB-A- 2 117 694
- JP-A- S58 219 031
- US-B1- 6 261 499

## Description

The present invention refers in general to the production of kinematic chains made of plastic components hinged to each other.

In general, the production of such kinematic chains provides for the molding of individual components and their subsequent assembly. In the design of the production process it is therefore necessary to organize the management of the different steps of molding and assembly, as well as the handling of a certain number of different parts. Another issue to take into account is the play that inevitably occurs between the various components. GB 2117694 A, WO 2015/086601 A1 and JP S58219031 A disclose sets of components hinged to each other according to the preamble to claim 1. GB 2117694 A also discloses a method according to the preamble of claim 2. A further set of components hinged to each other is disclosed by DE 19808223 A1.

One object of the present invention is therefore to make available a product and a method for the production of such a product which allow at least the aforementioned problems to be resolved.

For this object, the subject-matter of the invention is a set of components hinged to each other, said set comprising at least one first component having at least one hole and at least one second component having an articulation pin coupled to the hole of the first component, wherein said set is produced by multi-material injection molding, wherein said at least one first component is made of a first plastic material having a given melting point, wherein said at least one second component is made of a second plastic material having a lower melting point than the first plastic material and being non-adhesive to the first plastic material, and wherein the articulation pin of the second component is molded within the hole of the first component,
wherein on the second component there are formed ribs arranged around the articulation pin and axially interposed between opposed surfaces of the first and second component.

A further subject-matter of the invention is a method for producing a set of components hinged to each other by multi-material injection molding, said method comprising
configuring a mold in a first molding configuration, in which within the mold is defined a first injection cavity, comprising at least one area occupied by a mold insert,
injecting into the mold in the first molding configuration a first plastic material having a given melting point, said first plastic material filling the first injection cavity to form a first component and arranging itself around said at least one area occupied by a shaping insert to form at least one respective hole passing through the first component,
configuring the mold into a second molding configuration, in which within the mold there is defined at least one second injection cavity, said at least one second cavity comprising said at least one through hole without the hole shaping insert,
injecting in the mold in the second molding configuration a second plastic material having a lower melting point than the melting point of the first material and being non-adhesive to the first plastic material, said second plastic material filling said at least one second injection cavity to form at least one second component and arranging itself within said at least one hole to form a respective articulation pin of the second component,
wherein in the second molding configuration transversely movable inserts are positioned around said at least one hole in contact with the first component to form on the second component ribs arranged around the articulation pin and axially interposed between opposed surfaces of the first and second component.

By exploiting, within the molding process, the chemical incompatibility (non-adhesion) of plastic materials and their shrinkage by cooling, it is possible to achieve a coupling between the components with zero play. Furthermore, since the assembled set is already produced within the same mold, it is not necessary to provide for the handling of several different parts, nor to provide for a subsequent assembly step.

Further features and advantages of the product and of the production method according to the invention will become more apparent in the following detailed description of an embodiment of the invention, made with reference to the accompanying drawings, provided purely to be illustrative and non-restrictive, wherein
Figure 1 is a perspective view of a set of hinged components according to the invention;
Figure 2 is a view in cross-section taken at a hinge between two components of the set of Figure 1;
Figure 3 is an exploded view taken at the hinge in Figure 2;
Figures 4 to 9 are perspective views of a mold arranged to produce the set of Figure 1, in different operating steps; and
Figures 10 to 16 are views in cross-section taken from various areas of the mold in the different operating steps.

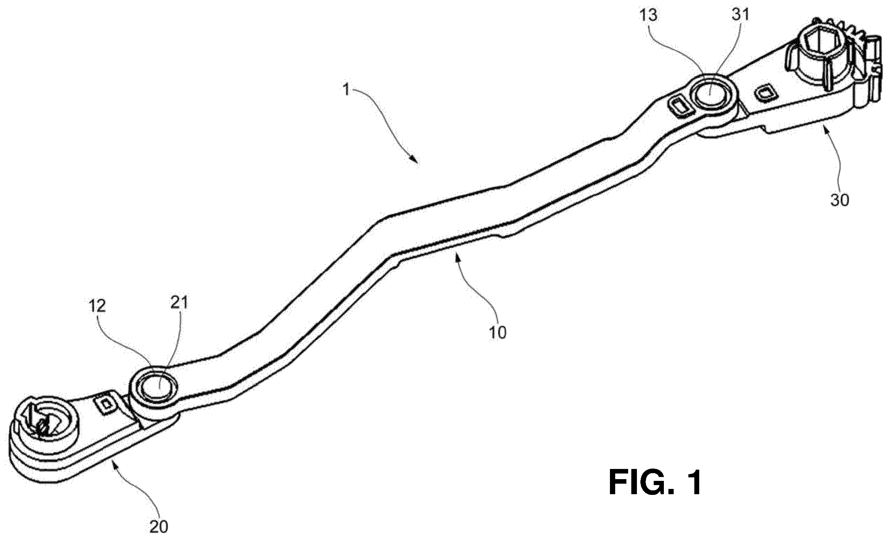

Figures 1 to 3 show an example of a set of components hinged to each other, in particular a kinematic chain to drive movable parts (not shown) within an air conditioning unit. The set of the illustrated example, indicated collectively at 1, comprises a first component 10 which in the illustrated example consists of a tie rod, at the ends of which are respectively hinged a second component 20 and a third component 30, which in the illustrated example consist of levers configured to be respectively connected to an actuator (not illustrated) and to a movable part (not illustrated) to be controlled by the actuator. As may be appreciated, neither the number nor the geometric configuration of the components nor the intended use of the set are essential to the purposes of the invention.

The first component 10 has two holes 12 and 13, and each of the second components 20 and 30 has an articulation pin 21 and 31 coupled to the respective hole 12, 13 of the first component 10.

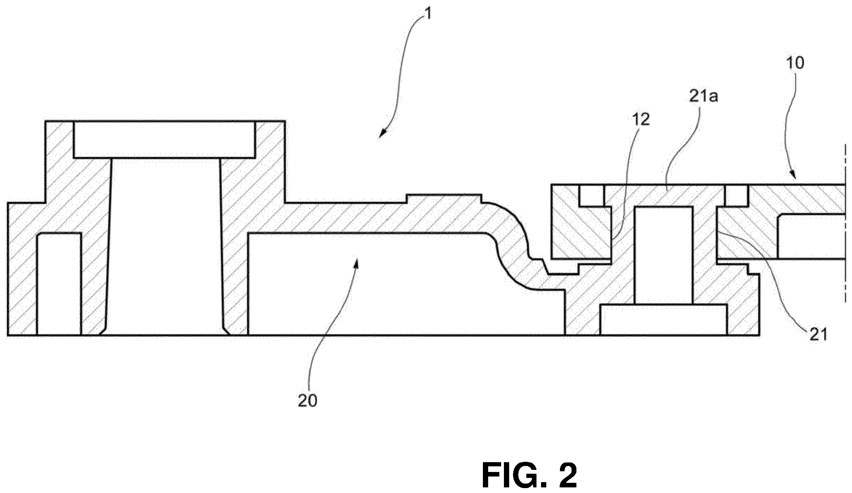

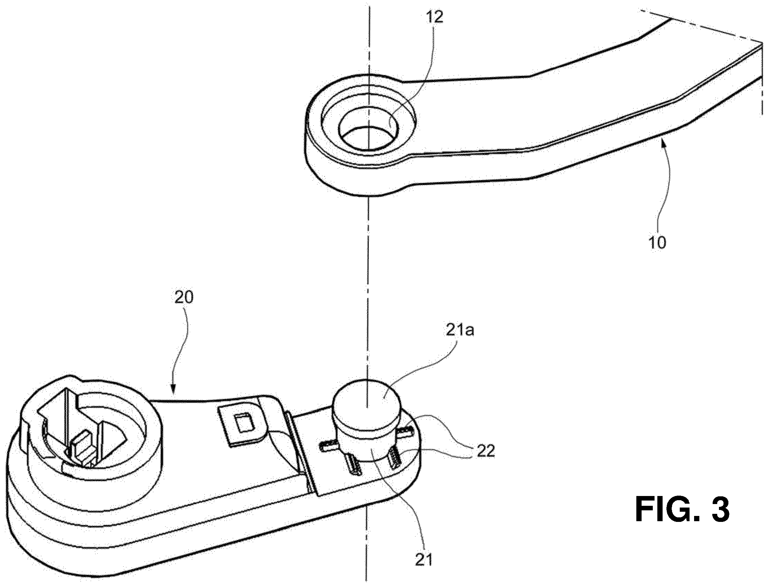

The set 1 is produced by multi-material injection molding. The first component 10 is a monolithic part made of a first plastic material having a given melting point, e.g. polyamide (PA) 6 or 6,6. The second components 20, 30 are each a monolithic part made of a second plastic material having a melting point lower than the melting point of the first plastic material and not adhering to the first plastic material, e.g. polyoxymethylene (POM). The articulation pins 21, 31 of the second components are molded within the respective holes 12, 13 of the first component 10. The hinge connecting the second component indicated at 20 to the first component 10 is shown in Figures 2 and 3. It is understood that the hinge connecting the second component indicated at 30 to the first component 10 has a similar structure. In this regard, it is noted that the view of Figure 3 has the sole function of showing some details of the hinge otherwise not visible but does not represent in any way an actual condition of the set, since in order to obtain it the articulation pin would have to break.

By playing on the chemical incompatibility of the plastic materials used and their shrinkage during cooling, it is possible to ensure that the radial play between each hole 12, 13 and the respective rotation pin 21, 31 is substantially zero.

On the second component 20 (and also on the third component) there are formed ribs 22 arranged around the articulation pin 21 and axially interposed between opposed surfaces of the first and the second component 10, 20. By adjusting the height of the ribs the axial play between the first and the second (third) component may be adjusted.

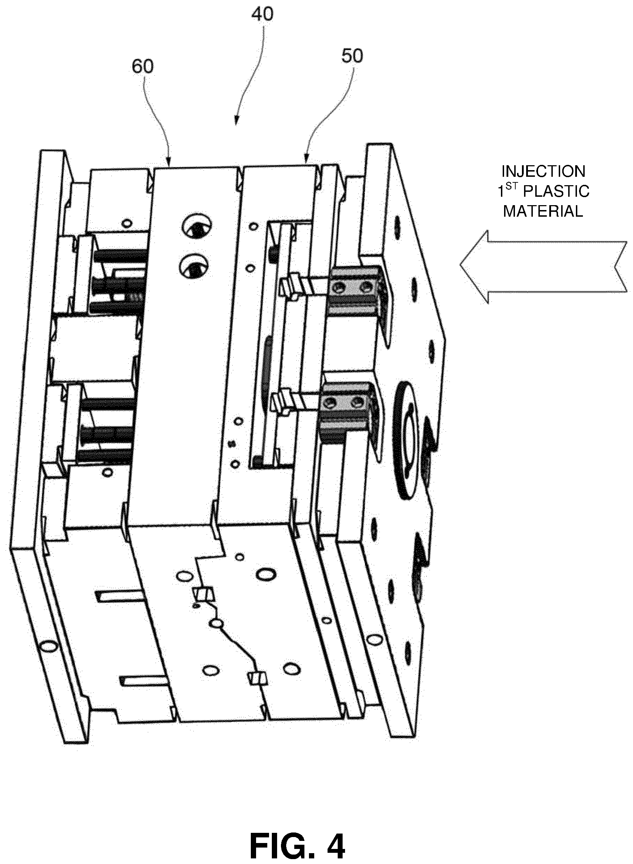

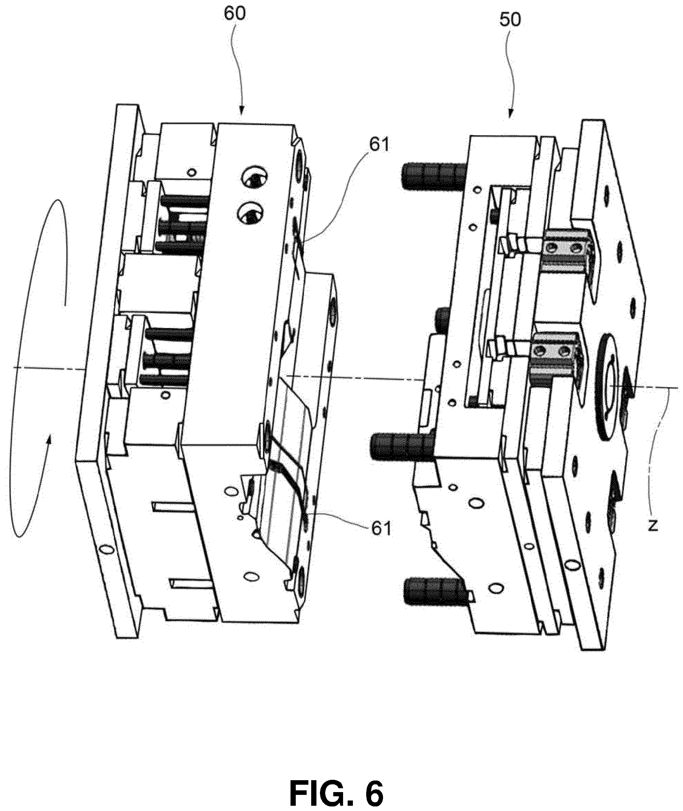

With reference to Figures 4 to 9, an example of a mold is represented that allows the set represented in Figures 1-3 to be produced. This mold, indicated collectively at 40, is configured to process two sets at a time. The mold 40 comprises a first half-mold 50 and a second half-mold 60. In the example illustrated, the second half-mold 60 is moved rectilinearly to or from the first half-mold 50 to close and open the mold 40 respectively. Moreover, the second half-mold 60 is rotatable around a central axis z, as shown in Figure 6.

On diametrically opposite positions of the second half-mold 60, two seats 61 are obtained, which are used for the molding and handling of the first component 10.

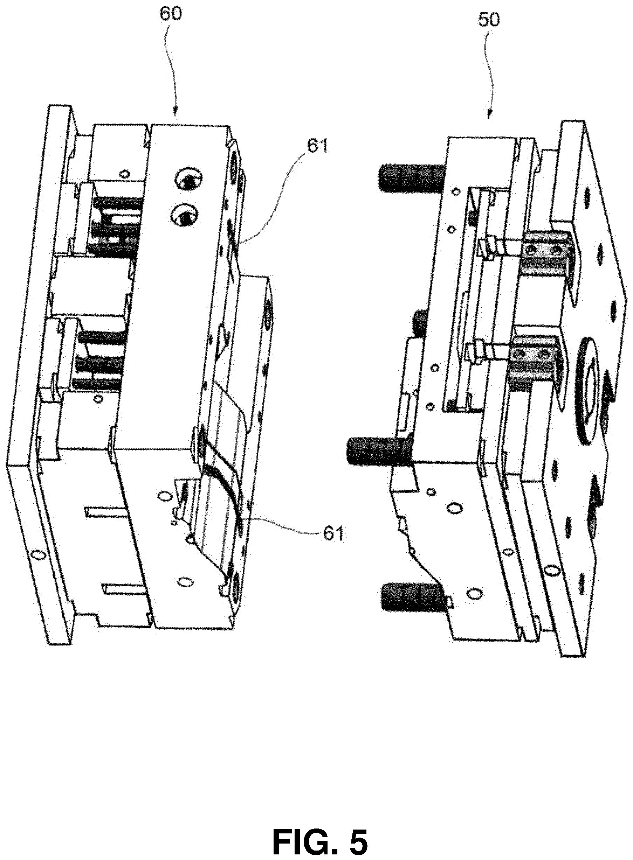

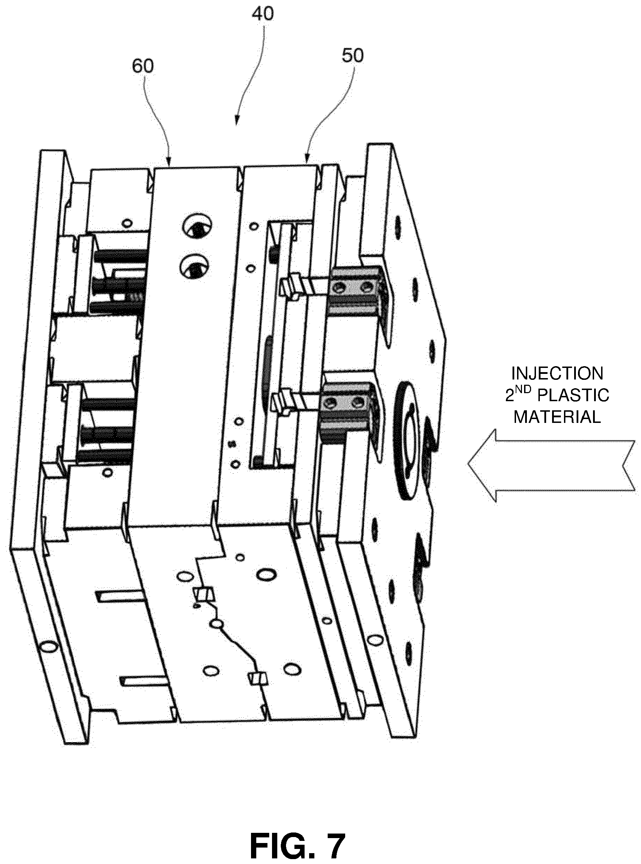

Figure 4 shows the mold 40 closed. The first plastic material is injected into the first half-mold 50. The mold 40 is then opened (Figure 5), the second half-mold 60 is rotated 180° around the central axis z thereof (Figure 6) and the mold 40 is closed again (Figure 7). In this way, the part of the second half-mold 60 that in the position of Figure 4 was in contact with the upper part of the first half-mold 50, in the position of Figure 7 is now in contact with the lower part of the first half-mold 50, where the injection of the second plastic material takes place. Whereas the second half-mold 60 is rotationally symmetrical with respect to the central axis z, the first half-mold 50 is asymmetrical. As will be explained hereinafter, this allows the molding of the different components in the same mold to be achieved.

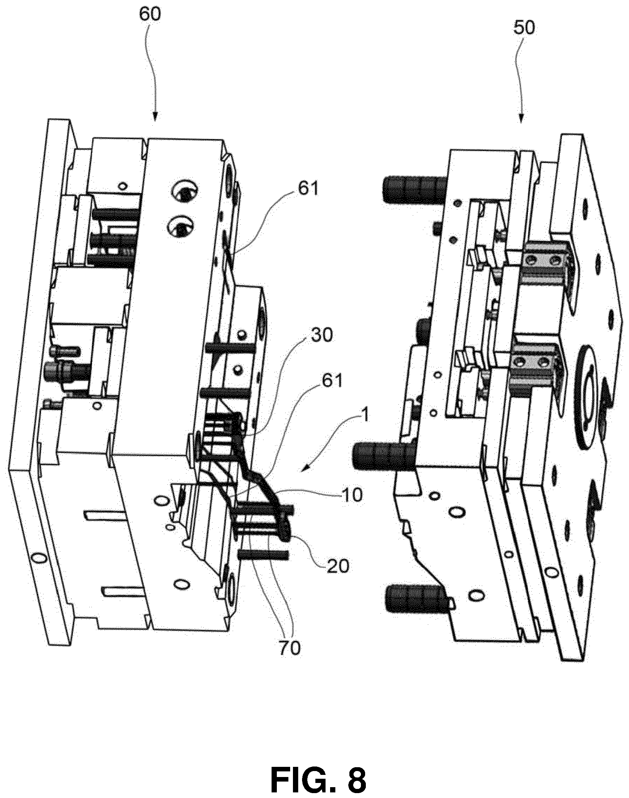

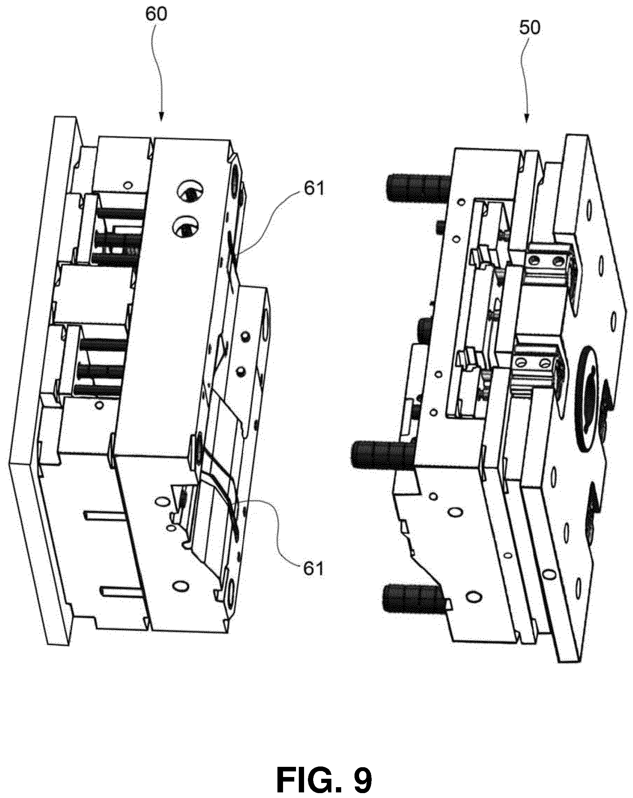

Once the molding of the set is finished, the mold is opened again and the set 10 is ejected (Figure 8) with the actuation of pushing elements 70. These pushing elements are then retracted (Figure 9) to allow the mold to be closed again.

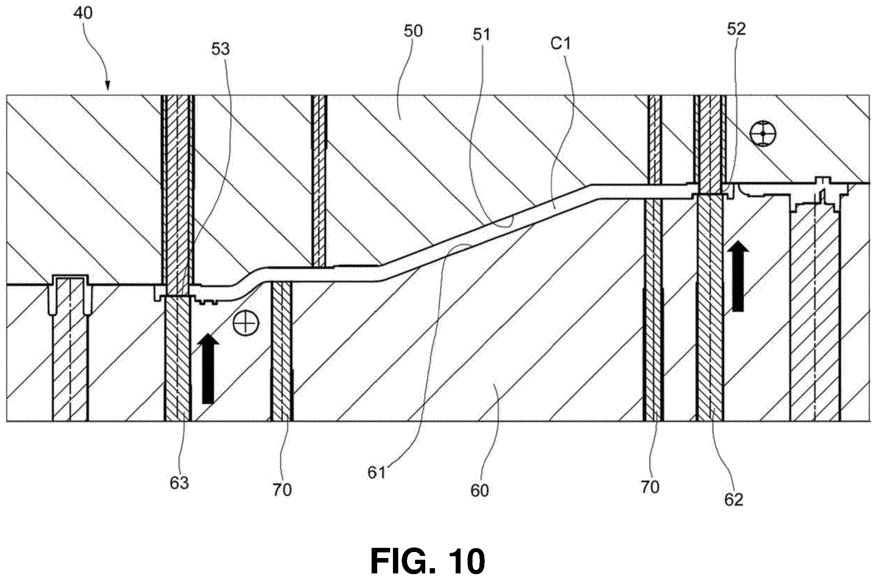

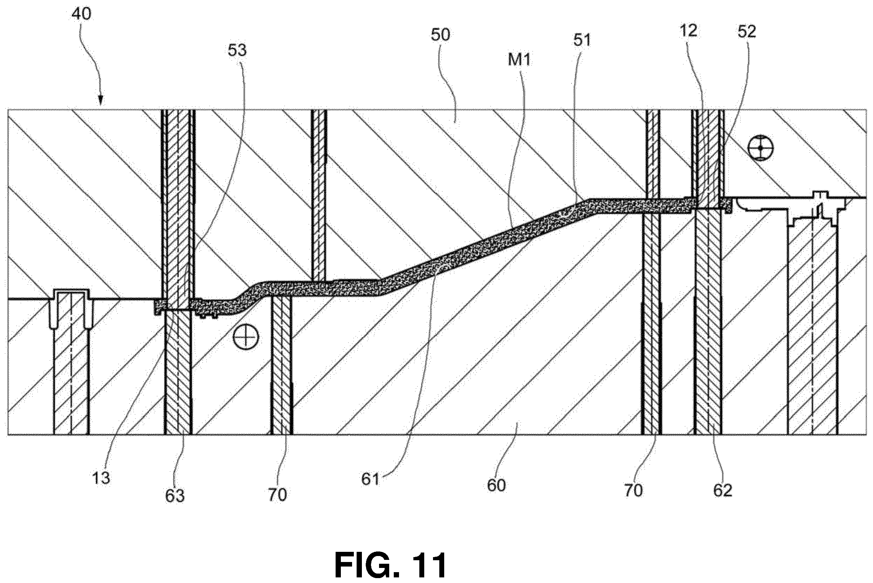

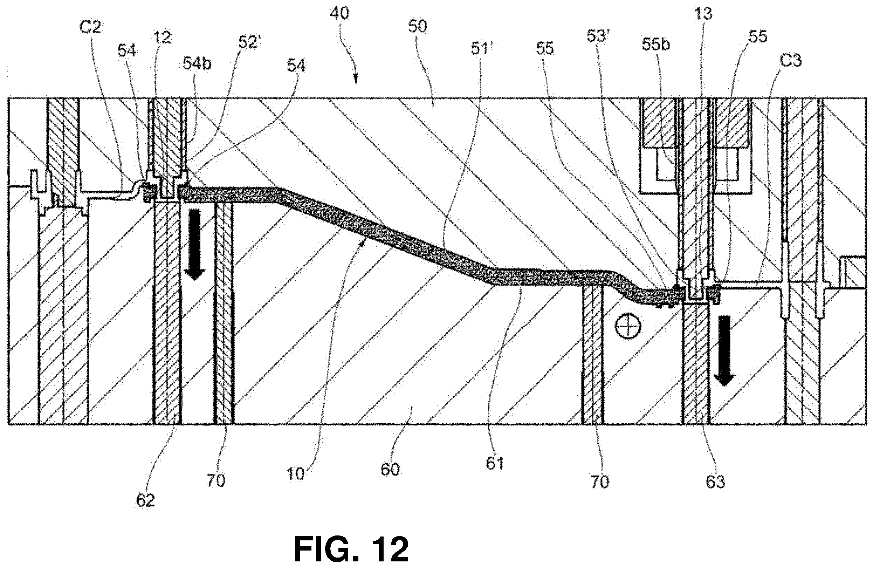

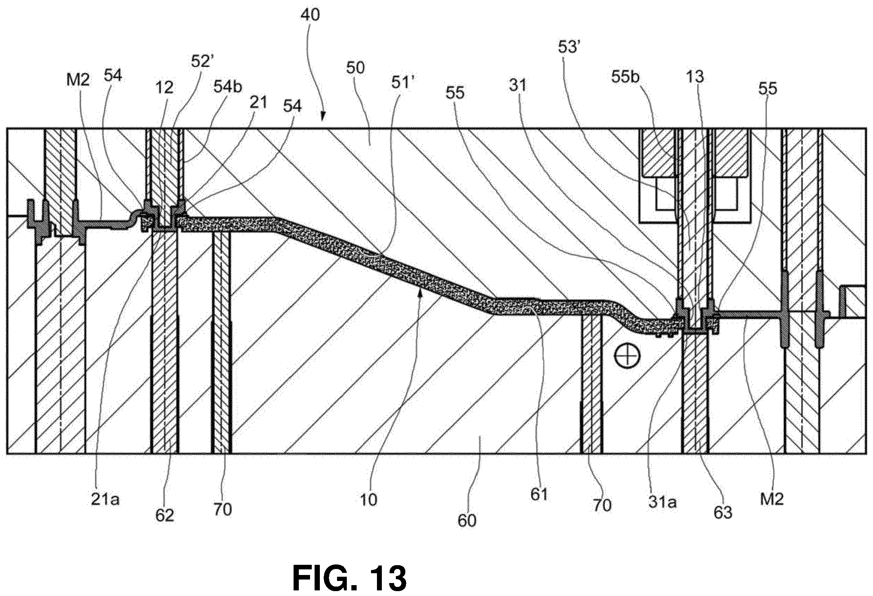

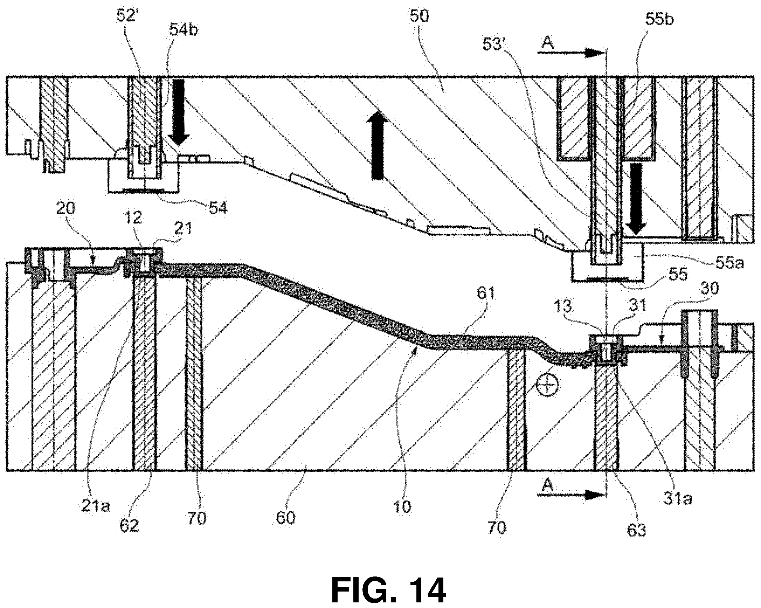

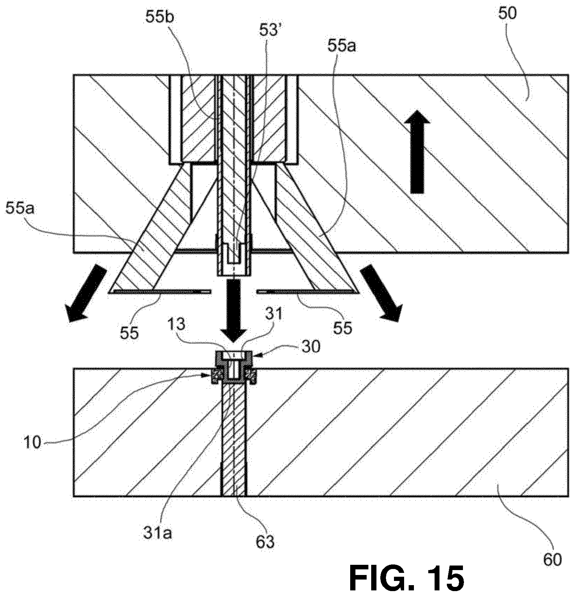

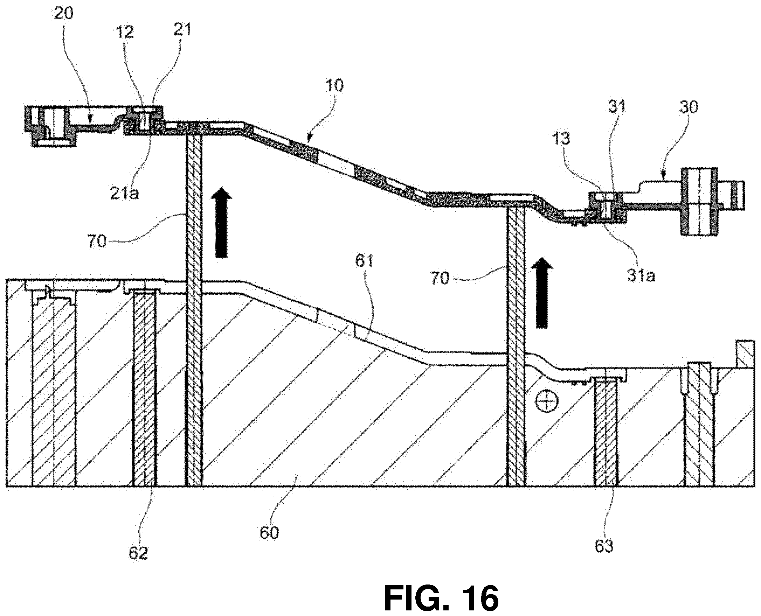

With reference to Figures 10-16, the molding process carried out with the mold 40 shown in Figures 4 to 9 is illustrated. The cross-section shown in Figures 10 and 11 is taken on a horizontal plane at the top of the mold 40, when the mold is in the closed position shown in Figure 4. The cross-section shown in Figures 12 and 13 is taken on a horizontal plane at the lower part of the mold, after the second half-mold 60 has been rotated and the mold 40 closed in the position shown in Figure 7. The cross-section shown in Figures 14 and 16 is taken in the same plane as Figures 12 and 13, but with the mold open after the second component has been molded (Figure 14), and with the subsequent actuation of the pushing elements 70 (Figure 16). The cross-section shown in Figure 15 is taken on a vertical plane, in the direction of the line A-A in Figure 14.

As may be seen in Figure 10, in the second half-mold 60 there is obtained a first molding seat 61 that cooperates with an opposing surface 51 of the first half-mold 50 to define a first injection cavity C1. On the first half-mold 50 there are arranged a first and a second hole shaping insert, respectively indicated at 52 and 53, having respective ends arranged within the first injection cavity. On the second half-mold 60 there are arranged a first and a second movable insert, respectively indicated at 62 and 63, which in the position in Figure 10 are positioned with their respective ends abutting against the first and second hole shaping insert, 52 and 53.

Figure 11 shows the injection of the first molten plastic material M1 into the first injection cavity C1 by means known per se and not represented in the figures. The first plastic material M1 fills the first injection cavity C1 and arranges itself around the molding inserts 52 and 53. With the subsequent cooling and solidification of the first plastic material M1 in the first cavity C1, the first component 10 is thus formed with the holes 12 and 13 made with the forming inserts 52 and 53. Subsequently, the second half-mold 60 opens and rotates 180°, carrying therewith the first component 10 into the molding seat 61, and then the second half-mold 60 closes on the first half-mold 50 as shown in Figures 5-7. When the mold 40 is opened, the forming inserts 52 and 53 integral with the first half-mold 50, have then been extracted from the holes 12 and 13 of the first component 10.

When the mold closes as shown in Figure 7, the molding seat 61 with the first component 10 is then brought against a lower area of the first half-mold 50, different from the upper area shown in Figures 12 and 13, as may be seen in Figure 12.

In the position shown in Figure 12 the first component 10 is held in the molding seat 61 of the second half-mold 60 against an opposing surface 51' of the first half-mold 50. As may also be seen in Figure 12, the first and second half-mold 50, 60 cooperate to define two second injection cavities C2, C3, each of which comprises one of the holes 12 and 13 of the first component 10. On the first half-mold 50 there are arranged a first and a second pin shaping insert, respectively indicated at 52' and 53', which have respective ends arranged respectively between the first hole 12 and the second hole 13 of the first component 10. On the second half-mold 60, the first and second movable insert, indicated at 62 and 63 respectively, are retracted so as to space the end of each movable insert 62 and 63 apart from the respective end of the respective shaping insert 52', 53'. This also creates an axial gap between the end of each insert 62 and 63 and a respective surface surrounding the respective hole 12 and 13 of the first component. Note that the diameter of each movable insert 62, 63 (and thus of the respective cavity into which each movable insert slides) is greater than the diameter of the first hole 12 and the second 13, respectively, in order to create an undercut.

Figure 13 shows the injection of the second molten plastic material M2 into the second injection cavity C2 and C3, by means known per se and not represented in the figures. The second plastic material M2 fills the second injection cavities C2 and C3 and is arranged within the holes 12 and 13 of the first component 10 around the shaping inserts 52' and 53' and in the axial gaps between the movable inserts 62, 63 and the respective surfaces of the first component 10 which surround the holes 12 and 13. With the subsequent cooling and solidification of the second plastic material M2 in the second cavities C2 and C3, the second components 20, 30 with the respective articulation pins 21 and 31 are formed. Each rotation pin 21, 31 is thus molded within the respective hole 12, 13 which provides for imparting thereto the shape on the radially outer side, while the respective pin shaping insert 52', 53' provides for imparting thereto the shape on the radially inner side. The movable inserts 62, 63 with the respective opposing surfaces of the first component 10, on the other hand, provide for creating on each articulation pin 21 and 31 a respective enlarged end 21a, 31a, which defines an undercut with respect to the articulation pin and prevents the articulation pin 21, 32 from slipping out of the respective hole 12, 13.

As may also be seen in Figures 12 and 13, on the first half-mold 50 there are also arranged movable inserts 54 and 55 which are used to create the ribs (indicated at 22 in Figure 3) for adjusting the axial play on the second components 20 and 30.

Such movable inserts 54 and 55 in the molding configuration of Figures 12 and 13 are positioned around each hole 12 and 13 in contact with the first component 10. The movable inserts 54 and 55 are supported by movable arms in a plane orthogonal to that of Figures 12 and 13. Figure 15 shows the movable blades, indicated at 55a, which support the movable inserts 55 associated with the hole 13, but the arrangement is similar for the movable inserts 54 associated with the hole 12. As may be seen, the hole 13 is associated with a pair of movable inserts 55 arranged on diametrically opposite sides with respect to the hole 13. Each movable insert 55 is supported by a movable blade 55a slidable in an inclined direction. The movable inserts 55 are operatively connected with a movable sleeve 55b arranged coaxially with the pin shaping insert 53'. Figure 14 also shows the movable sleeve 54b associated with the other shaping insert 52'.

When the second half-mold 60 is moved away from the first half-mold 50 to open the mold 40 (Figure 14), the sleeves 55b and 54b are further activated and advance towards the second half-mold 60 to free the undercut from the second half-mold 60. At the same time, as shown in Figure 15, the movable inserts 54 and 55 move transversely outwards to release the hinges between the first component 10 and the second components 20 and 30. The movement of the first half-mold 50 and the movable plates 55a is coordinated in such a way that, in the reference system of the second half-mold 60, the motion of the movable inserts 55 and 54 is purely horizontal.

Figure 16 shows the open mold, with the actuation of the pushing elements 70 of the second half-mold 60 to cause the complete set 10 to be ejected from the mold.

Although in the description of the process reference has been made for simplicity to the production of only one set 10, it is actually possible to process two sets at a time in the mold. In particular, when, in the upper part of the mold 40, the first plastic material is injected into the first injection cavity C1, in the lower part of the mold 40, the second plastic material is injected into the second injection cavities C2 and C3 on the first component 10, which was produced in the upper part of mold 40 in the previous step of the operating cycle. Once the complete set 10 is ejected from the lower part of the mold 40, the second half-mold 60 is rotated to bring up the empty molding cavity 61, ready for a new injection of the first plastic material, while the first component 10 that has been produced in the upper part of the mold is brought down for the subsequent injection of the second plastic material.

It is understood that the invention is not limited to the embodiments described and illustrated herein, but rather may undergo modifications relating to the shape and arrangement of parts, construction and operating details according to the numerous possible variants which will appear suitable to persons skilled in the art and which are to be understood as comprised in the scope of the invention, as defined by the following claims.

## Claims

1. A set of components (10, 20, 30) hinged to each other, said set comprising at least one first component (10) having at least one hole (12, 13) and at least one second component (20, 30) having an articulation pin (21, 31) coupled to the hole (12, 13) of the first component (10), wherein said set is produced by multi-material injection molding, wherein said at least one first component (10) is made of a first plastic material having a given melting point, wherein said at least one second component (20, 30) is made of a second plastic material having a lower melting point than the first plastic material and being non-adhesive to the first plastic material, and wherein the articulation pin (21, 31) of the second component (20, 30) is molded within the hole (12, 13) of the first component (10),
the set being **characterized in that** on the second component (20, 30) there are formed ribs (22) arranged around the articulation pin (21, 31) and axially interposed between opposed surfaces of the first (10) and second component (20, 30).

2. A method for producing a set of components (10, 20, 30) hinged to each other by multi-material injection molding, said method comprising
configuring a mold (40) into a first molding configuration, in which within the mold (40) there is defined a first injection cavity (C1) within which at least one hole shaping insert (52, 53) extends,
injecting into the mold (40) in the first molding configuration a first plastic material having a given melting point, said first plastic material filling the first injection cavity (C1) to form a first component (10) and arranging itself around said hole shaping insert to form at least one respective hole (12, 13) through the first component (10),
configuring the mold (40) into a second molding configuration, in which within the mold (40) there is defined at least one second injection cavity (C2, C3), said at least one second injection cavity comprising said at least one through hole (12, 13) without the hole shaping insert (52, 53),
injecting into the mold (40) in the second molding configuration a second plastic material having a lower melting point than the first material and being non-adhesive to the first plastic material, said second plastic material filling said at least one second injection cavity (C2, C3) to form at least one second component (20, 30) and arranging itself within said at least one hole (12, 13) to form a respective articulation pin (21, 31) of the second component (20, 30),
the method being **characterized in that** in the second molding configuration transversely movable inserts (55, 56) are positioned around said at least one hole (12, 13) in contact with the first component (10) to form on the second component (20, 30) ribs (22) arranged around the articulation pin (21, 31) and axially interposed between opposed surfaces of the first (10) and second component (20, 30).

## Patentansprüche

1. Ein Satz drehbar aneinander angelenkter Komponenten (10, 20, 30), wobei der Satz mindestens eine erste Komponente (10) mit mindestens einer Öffnung (12, 13) und mindestens eine zweite Komponente (20, 30) mit einem an die Öffnung (12, 13) der ersten Komponente (10) gekoppelten Gelenkstift (21, 31) aufweist, wobei der Satz durch Multi-material-Spritzgießen hergestellt wird, wobei die mindestens eine erste Komponente (10) aus einem ersten Kunststoffmaterial mit einem vorgegebenen Schmelzpunkt gefertigt ist, wobei die mindestens eine zweite Komponente (20, 30) aus einem zweiten Kunststoffmaterial gefertigt ist, das einen niedrigeren Schmelzpunkt als das erste Kunststoffmaterial hat und das an dem ersten Kunststoffmaterial nicht klebend ist, und wobei der Gelenkstift (21, 31) der zweiten Komponente (20, 30) in die Öffnung (12, 13) der ersten Komponente (10) gebildet wird,
wobei der Satz **dadurch gekennzeichnet ist, dass** an der zweiten Komponente (20, 30) Rippen (22) ausgebildet sind, die um den Gelenkstift (21, 31) angeordnet sind und axial zwischen einander gegenüberliegenden Flächen der ersten (10) und der zweiten Komponente (20, 30) zwischengesetzt sind.

2. Verfahren zur Herstellung eines Satzes von Komponenten (10, 20, 30), die durch Multimaterial-Spritzgießen drehbar aneinander angelenkt sind, wobei das Verfahren aufweist:
Konfigurieren einer Gussform (40) in eine erste Gussformungskonfiguration, in der innerhalb der Gussform (40) ein erster Einspritzhohlraum (C1) vorgesehen ist, innerhalb dessen sich mindestens ein Öffnungsausbildungseinsatz (52, 53) erstreckt,
Einspritzen eines ersten Kunststoffmaterials mit einem vorgegebenen Schmelzpunkt in die Gussform (40) in der ersten Gussformungskonfiguration, wobei das erste Kunststoffmaterial den ersten Einspritzhohlraum (C1) ausfüllt, um eine erste Komponente (10) zu formen, und sich derart um den Öffnungsausbildungseinsatz anordnet, dass es mindestens eine jeweilige Öffnung (12, 13) durch die erste Komponente (10) bildet,
Konfigurieren der Gussform (40) in eine zweite Gussformungskonfiguration, in der innerhalb der Form (40) mindestens ein zweiter Einspritzhohlraum (C2, C3) vorgesehen ist, wobei der mindestens eine zweite Einspritzhohlraum mindestens eine Durchgangsöffnung (12, 13) ohne den Öffnungsausbildungseinsatz (52, 53) aufweist,
Einspritzen eines zweiten Kunststoffmaterials, das einen niedrigeren Schmelzpunkt als das erste Kunststoffmaterial hat und das an dem ersten Kunststoffmaterial nicht klebend ist, in die Gussform (40) in der zweiten Gussformungskonfiguration, wobei das zweite Kunststoffmaterial den mindestens einen zweiten Einspritzhohlraum (C2, C3) ausfüllt, um mindestens eine zweite Komponente (20, 30) zu formen, und sich derart innerhalb der mindestens einen Öffnung (12, 13) anordnet, dass es einen jeweiligen Gelenkstift (21, 31) der zweiten Komponente (20, 30) formt,
wobei das Verfahren **dadurch gekennzeichnet ist, dass** in der zweiten Gussformungskonfiguration in Querrichtung bewegliche Einsätze (55, 56) in Kontakt mit der ersten Komponente (10) um die mindestens eine Öffnung (12, 13) angeordnet sind, um Rippen (22) auf der zweiten Komponente (20, 30) zu formen, die um den Gelenkstift (21, 31) angeordnet sind und axial zwischen einander gegenüberliegenden Flächen der ersten (10) und der zweiten Komponente (20, 30) zwischengesetzt sind.

## Revendications

1. Ensemble de composants (10, 20, 30) fixés par charnière les uns aux autres, ledit ensemble comprenant au moins un premier composant (10) ayant au moins un trou (12, 13) et au moins un second composant (20, 30) ayant une broche d'articulation (21, 31) couplée au trou (12, 13) du premier composant (10), où ledit ensemble est produit par moulage par injection de plusieurs matières, ledit premier composant (10), au moins au nombre de un, étant composé d'une première matière plastique ayant un point de fusion donné, ledit second composant (20, 30), au moins au nombre de un, étant composé d'une seconde matière plastique ayant un point de fusion inférieur à celui de la première matière plastique et étant non adhésive sur la première matière plastique, et où la broche d'articulation (21, 31) du second composant (20, 30) est moulée au sein du trou (12, 13) du premier composant (10),
l'ensemble étant **caractérisé en ce que** sur le second composant (20, 30) sont formées des nervures (22) agencées autour de la broche d'articulation (21, 31) et interposées axialement entre des surfaces opposées des premier (10) et second composants (20, 30).

2. Procédé de production d'un ensemble de composants (10, 20, 30) fixés par charnière les uns aux autres par moulage par injection de plusieurs matières, ledit procédé comprenant
la configuration d'un moule (40) selon une première configuration de moulage, dans laquelle au sein du moule (40) est définie une première cavité d'injection (C1) au sein de laquelle s'étend au moins un insert de mise en forme de trou (52, 53),
l'injection dans le moule (40), dans la première configuration de moulage, d'une première matière plastique ayant un point de fusion donné, ladite première matière plastique remplissant la première cavité d'injection (C1) pour former un premier composant (10) et s'agençant autour de l'insert de mise en forme de trou pour former au moins un trou (12, 13) respectif à travers le premier composant (10),
la configuration du moule (40), selon une seconde configuration de moulage, dans laquelle au sein du moule (40) est définie au moins une seconde cavité d'injection (C2, C3), ladite seconde cavité d'injection, au moins au nombre de une, comprenant ledit trou traversant (12, 13), au moins au nombre de un, sans l'insert de mise en forme de trou (52, 53), l'injection dans le moule (40), dans la seconde configuration de moulage, d'une seconde matière plastique ayant un point de fusion inférieur à celui de la première matière et étant non adhésive sur la première matière plastique, ladite seconde matière plastique remplissant ladite seconde cavité d'injection (C2, C3), au moins au nombre de une, pour former au moins un second composant (20, 30) et s'agençant au sein dudit trou (12, 13), au moins au nombre de un, pour former une broche d'articulation (21, 31) respective du second composant (20, 30),
le procédé étant **caractérisé en ce que**, dans la seconde configuration de moulage, des inserts (55, 56) mobiles transversalement sont positionnés autour dudit trou (12, 13), au moins au nombre de un, en contact avec le premier composant (10) pour former sur le second composant (20, 30) des nervures (22) agencées autour de la broche d'articulation (21, 31) et interposées axialement entre des surfaces opposées des premier (10) et second (20, 30) composants.
